# FASCICULE DE BREVET EUROPEEN

(11) **EP 2 235 424 B1**
(45) Date de publication et mention de la délivrance du brevet: **19.10.2011**
(21) Numéro de dépôt: 08865370.4
(22) Date de dépôt: 09.12.2008
(51) Int. Cl.: F17C 1/00, F17C 11/00

(54) **RÉSERVOIR DE STOCKAGE D'HYDROGÈNE**
WASSERSTOFFSPEICHER
HYDROGEN STORAGE TANK

(30) Priorité: 10.12.2007 FR 0759690
(43) Date de publication de la demande: 06.10.2010
(73) Titulaire: Centre National de la Recherche Scientifique (C.N.R.S.), 75016 Paris (FR); UNIVERSITE JOSEPH FOURIER, 38041 Grenoble Cédex (FR)
(72) Inventeur: DE RANGO, Patricia, F-38610 Gieres (FR); CHAISE, Albin, F-38600 Fontaine (FR); FRUCHART, Daniel, F-38240 Meylan (FR); MARTY, Philippe, F-38410 Saint Martin D'uriage (FR); MIRAGLIA, Salvatore, F-38000 Grenoble (FR)
(74) Mandataire: Jacobson, Claude
(86) Numéro de dépôt international: PCT/FR2008/052252
(87) Numéro de publication internationale: WO 2009/080975

(56) Documents cités:
- WO-A-97/21370
- WO-A-97/36819
- WO-A-2007/011476
- DE-A1- 3 542 185
- DE-A1-102004 003 319
- US-A1- 2004 129 048
- US-A1- 2007 031 325

## Description

La présente invention concerne un réservoir de stockage d'hydrogène sous forme d'hydrure métallique, du type comprenant un conteneur pour contenir de l'hydrogène, et de l'hydrure métallique disposé à l'intérieur du conteneur.

Un réservoir du type précité peut être utilisé pour l'alimentation en hydrogène d'une pile à combustible ou d'un moteur thermique.

WO 2007/011476A2 décrit un réservoir de stockage d'hydrogène comprenant un conteneur tubulaire à l'intérieur duquel sont disposées des cellules, chaque cellule étant composée d'une pluralité de petits récipients en forme de secteur, chaque récipient contenant de la poudre d'hydrure métallique.

Un but de l'invention est de fournir un réservoir de stockage d'hydrogène sous forme d'hydrure métallique permettant le stockage d'un volume d'hydrogène important, avec des vitesses de chargement et de déchargement satisfaisantes.

A cet effet, l'invention propose un réservoir de stockage d'hydrogène du type précité, **caractérisé en ce qu'**il comprend au moins un corps solide formé d'un matériau compacté comprenant de l'hydrure métallique et une matrice.

Selon d'autres modes de réalisation, le réservoir comprend une ou plusieurs des caractéristiques suivantes, prise(s) isolément ou selon toutes les combinaisons techniquement possibles :
- la matrice est formée de graphite expansé, de préférence de graphite naturel expansé ;
- l'hydrure métallique est un hydrure de magnésium ou d'alliage de magnésium ;
- le réservoir comprend une pluralité de corps solides empilés à l'intérieur du conteneur suivant une direction d'empilement ;
- le ou chaque corps solide présente la forme d'une pastille et est maintenu à l'intérieur du conteneur de façon à ménager un espace annulaire entre surface intérieure latérale du conteneur et le ou chaque corps solide ;
- le réservoir comprend un échangeur de chaleur ayant au moins une canalisation pour un fluide caloporteur, s'étendant à l'intérieur du conteneur ;
- la canalisation s'étend au travers de corps solides ;
- le réservoir comprend des plaques métalliques enfilées sur la canalisation en alternance avec les corps solides ;
- le réservoir comprend des entretoises annulaires enfilées sur la canalisation en alternance avec les plaques métalliques, le ou chaque corps solide étant enfilé sur une entretoise ;
- la canalisation comprend un conduit d'alimentation et un conduit d'évacuation d'un fluide caloporteur sensiblement coaxiaux ;
- la canalisation comprend un tube externe et un tube interne s'étendant à l'intérieur du tube externe, le tube interne définissant l'un du conduit d'alimentation et du conduit d'évacuation du fluide caloporteur, et le tube externe définissant avec le tube interne l'autre parmi le conduit d'alimentation et le conduit d'évacuation ;
- le conduit d'alimentation communique avec le conduit d'évacuation par l'intermédiaire d'orifices répartis le long du tube interne ;
- le conduit d'évacuation est annulaire et entoure le conduit d'alimentation.
- ce réservoir comprend des éléments de chauffage des corps solides ;
- et chaque élément de chauffage s'étend au travers de plusieurs corps solides ; et
- les éléments de chauffage sont des résistances électriques ;
- les corps solides sont maintenus mutuellement espacés le long de l'axe d'empilement, avec un espace de circulation de gaz entre eux ;
- le ou chaque corps solide comprend entre 15% et 25% en masse de graphite expansé, notamment environ 20% en masse de graphite expansé ; et
- le ou chaque corps solide comprend entre 1 et 10% en masse de graphite expansé, notamment entre 5% et 10% en masse de graphite expansé .

L'invention et ses avantages seront mieux compris à la lecture de la description qui va suivre, donnée uniquement à titre d'exemple, et faite en se référant aux dessins annexés, sur lesquels :
- la figure 1 est une vue schématique en coupe longitudinale d'un réservoir d'hydrogène comprenant des pastilles en matériau composite compacté ;
- la figure 2 est une vue agrandie de la zone II de la figure 1 ;
- la figure 3 est un graphique illustrant la densité et la porosité de pastilles en matériau composite compacté, en fonction de la pression de compaction ;
- la figure 4 est une vue schématique d'un banc de mesure de conductivité thermique selon le principe de la barre divisée ;
- la figure 5 est un graphique illustrant des mesures de conductivités thermiques effectuées sur des pastilles en matériau composite compacté ;
- la figure 6 est un graphique illustrant la courbe d'équilibre entre le magnésium (Mg) et l'hydrure de magnésium (MgH₂) en fonction de la température et de la pression ;
- les figures 7 à 10 sont des graphiques illustrant des essais comparatifs de chargement en hydrogène de réservoirs de stockage d'hydrogène sous forme d'hydrure métallique ; et
- la figure 11 est une vue analogue à celle de la figure 2, illustrant un réservoir d'hydrogène selon un autre mode de réalisation.

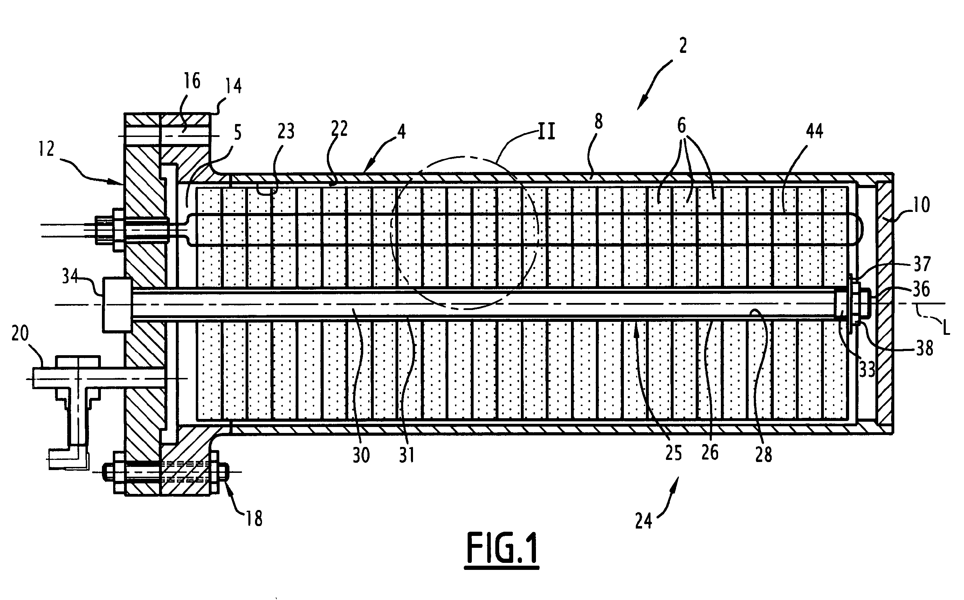

La figure 1 illustre un réservoir 2 conforme à l'invention de stockage d'hydrogène sous forme d'hydrure métallique.

Ce réservoir 2 comprend un conteneur 4 pour hydrogène, définissant un volume intérieur 5, et une pluralité de pastilles 6 de stockage d'hydrogène sous forme d'hydrure métallique, disposées à l'intérieur du conteneur 4.

Le conteneur 4 est tubulaire. Il comprend un tube 8 d'axe longitudinal L, fermé à une extrémité longitudinale par un couvercle fixe 10, soudé sur le tube 8, et à l'extrémité longitudinale opposée par un couvercle amovible 12. Le tube 8 possède une section transversale circulaire.

Le couvercle amovible 12 est par exemple vissé sur une bague 14 de fixation soudée à l'extrémité du tube 8 et prolongeant le tube 8 radialement vers l'extérieur. La bague 14 est munie d'orifices 16 pour le passage d'organes de fixation, tels que des boulons 18. Le conteneur 4 comprend une pluralité de boulons 18 répartis autour de l'axe L.

Le réservoir 2 comprend un conduit 20 de circulation d'hydrogène traversant le couvercle amovible 12 de manière étanche. Il permet de relier le volume 5 à une source d'alimentation en hydrogène, ou à une unité consommatrice d'hydrogène, telle qu'une pile à combustible ou un moteur thermique.

Chaque pastille 6 se présente sous la forme d'un corps solide réalisé en un matériau composite compacté comprenant de l'hydrure de magnésium et une matrice formée de graphite expansé, de préférence de graphite naturel expansé (GNE). Le matériau composite et son procédé de fabrication seront décrits plus en détail par la suite.

Chaque pastille 6 possède un contour périphérique correspondant sensiblement à la section du tube 8, ici circulaire. Les pastilles 6 sont alignées et empilées suivant l'axe L à l'intérieur du réservoir 4.

Chaque pastille 6 présente un diamètre extérieur sensiblement inférieur au diamètre intérieur du tube 8. Il en résulte que le réservoir 2 présente un espace 22 annulaire ménagé entre les pastilles 6 et la surface intérieure latérale 23 du tube 8, et s'étendant suivant l'axe L sur la longueur de l'empilement de pastilles 6.

Le réservoir 2 comprend un échangeur de chaleur 24 s'étendant à l'intérieur du conteneur 4, pour chauffer et/ou refroidir les pastilles 6 par échange de chaleur avec un fluide caloporteur circulant à l'intérieur de l'échangeur de chaleur 24.

L'échangeur de chaleur 24 comprend une canalisation 25 de fluide caloporteur s'étendant axialement au centre du conteneur 4, suivant l'axe L.

La canalisation 25 comprend un tube externe 26 et un tube interne 28 coaxiaux. Le tube interne 28 définit un conduit central 30 de canalisation du fluide caloporteur. Le tube externe 26 entoure le tube interne 28 et délimite avec celui-ci un conduit annulaire 31 de canalisation du fluide caloporteur entourant le conduit central 30.

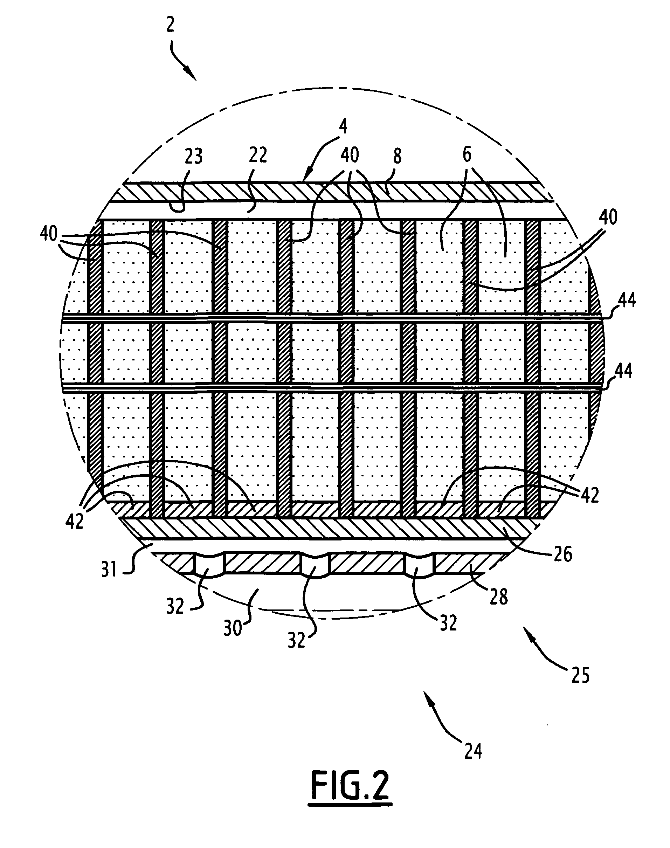

La paroi du tube interne 28 comprend des orifices 32 (Figure 2) répartis le long du tube interne 28 pour la circulation du fluide caloporteur entre le conduit annulaire 31 et le conduit central 30.

La canalisation 25 comprend à une extrémité un bouchon 33 (Figure 1) de fermeture du tube externe 26 et du tube interne 28.

L'extrémité opposée de la canalisation 25 traverse le couvercle amovible 12 de façon étanche, et est munie d'un embout 34 pour relier le conduit central 30 et le conduit annulaire 31 à un circuit (non représenté) de fluide caloporteur.

Le conduit central 30 et le conduit annulaire 31 sont reliés au circuit de façon que le conduit central 30 est un conduit d'alimentation, et le conduit annulaire 31 un conduit d'évacuation. En variante, le sens de circulation du fluide caloporteur est inversé.

Les pastilles 6 sont percées en leur centre. Elles sont enfilées sur le tube externe 26, en étant empilées suivant l'axe L. Ainsi, la canalisation 25 assure le maintien des pastilles 6 à l'intérieur du conteneur 4.

Le bouchon 33 comprend un goujon fileté 36. Le réservoir 2 comprend une rondelle d'appui 37 et un écrou de serrage 38 vissé sur le goujon 36 pour maintenir les pastilles 6 suivant l'axe L sur la canalisation 25.

Tel que représenté sur la figure 2, l'échangeur de chaleur 24 comprend des plaques 40 intercalées en alternance entre les pastilles 6.

Chaque plaque 40 présente la forme d'un disque de contour extérieur sensiblement identique à celui des pastilles 6, et percé en son centre. Chaque plaque 40 est enfilée sur le tube externe 26.

Chaque plaque 40 est en contact par son bord intérieur avec le tube externe 26, et en contact par ses surfaces opposées avec les pastilles 6.

L'échangeur de chaleur 24 comprend des entretoises 42 annulaires intercalées entre les plaques 40 pour maintenir leur écartement. Chaque pastille 6 est enfilée sur une entretoise 42 elle-même enfilée sur le tube externe 26.

Les plaques 40 sont destinées à améliorer les échanges de chaleur entre le tube externe 26 et les pastilles 6 en conduisant la chaleur entre le tube externe 26 et la périphérie des pastilles 6. Elles sont par exemple métalliques, de préférence en cuivre.

Les plaques 40 et la canalisation 25 forment une ossature de maintien des pastilles 6. Cette ossature comprend une pluralité d'intervalles annulaires, chaque intervalle étant défini entre deux plaques 40, et débouchant radialement vers l'extérieur dans l'espace 22.

Le réservoir 2 comprend des éléments de chauffage 44 s'étendant au travers des pastilles 6.

Chaque élément de chauffage 44 se présente sous la forme d'une tige métallique s'étendant au travers de pastilles 6. Chaque élément de chauffage 44 traverse le couvercle amovible 12 de façon étanche pour sa connexion à un circuit d'alimentation électrique (non représenté) pour la production de chaleur à l'intérieur du conteneur 4 par dissipation de chaleur par effet Joule.

Dans un procédé de fabrication du réservoir 2, on produit une pluralité de pastilles 6, on fixe la canalisation 25 et les éléments de chauffage 44 sur le couvercle amovible 12, on enfile les pastilles 6, les entretoises 42 et les plaques 40 sur le tube externe 26 de la canalisation 25, on insert l'ensemble à l'intérieur du tube 8, puis on fixe le couvercle amovible 12 sur la bague 16.

Le réservoir 2 ainsi obtenu contient initialement de l'hydrogène sous forme d'hydrure de magnésium.

Comme indiqué précédemment, chaque pastille 6 se présente sous la forme d'un corps solide formé d'un matériau composite compacté comprenant de l'hydrure de magnésium et une matrice (ou « squelette ») formée de graphite expansé, de préférence de graphite naturel expansé (GNE).

Le matériau est qualifié de « composite » du fait de l'utilisation combinée d'un hydrure métallique et d'une matrice, ici en GNE.

Le matériau composite est destiné à stocker de l'hydrogène par absorption sous forme d'hydrure de magnésium et à relâcher de l'hydrogène par désorption. La désorption d'hydrogène entraîne l'apparition de magnésium non hydruré dans le matériau composite. Dans la suite de la description, pour des raisons de simplification, «hydrure de magnésium » désigne de l'hydrure de magnésium et une éventuelle fraction de magnésium non hydruré de matériau composite.

Dans le cadre de l'invention, « compacté » désigne un matériau dont la masse volumique est significativement supérieure à celle des matières premières divisées respectives qui le composent, ici l'hydrure de magnésium et le GNE. La masse volumique du matériau composite est supérieure d'au moins 100%, et pourra atteindre 400%, de celle des matières premières divisées.

Selon un procédé de fabrication des pastilles 6, le matériau composite est obtenu par compaction d'un mélange de poudre d'hydrure de magnésium (MgH₂) et de particules de GNE.

La poudre d'hydrure de magnésium présente de préférence une granulométrie comprise entre 1 et 10 µm.

Le mélange des poudres est réalisé de manière conventionnelle, par exemple dans un mélangeur, à température ambiante et à pression atmosphérique.

La compaction du mélange de poudres est réalisée de préférence par compression uniaxiale, par exemple dans une pastilleuse.

De préférence, le mélange et la compaction sont réalisés sous atmosphère contrôlée, notamment pour éviter l'oxydation de la poudre d'hydrure de magnésium, qui est pyrophorique.

La pression exercée lors de la compaction est choisie notamment en fonction de la porosité désirée dans le matériau composite. A titre indicatif, une pression de l'ordre de 1 t/cm² (10⁸ Pa) s'est révélée appropriée pour l'obtention de pastilles présentant une porosité de l'ordre de 0,3.

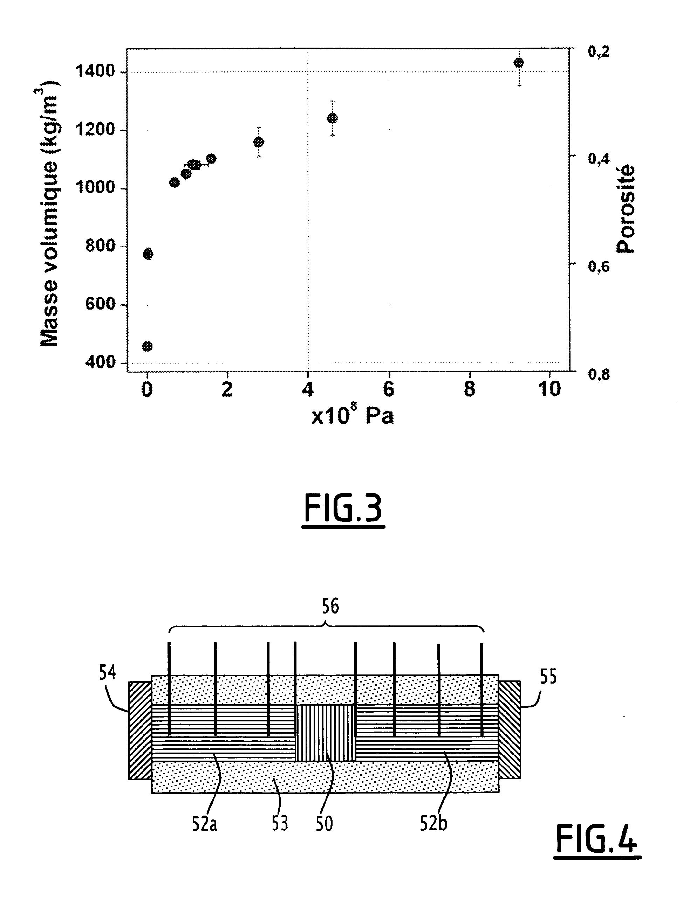

Le graphique de la figure 3 illustre la densité et la porosité de pastilles de matériau composite compacté obtenues conformément à l'invention, pour différentes pressions de compaction.

La compaction augmente la densité volumique en hydrure métallique, et donc la capacité volumique de stockage d'hydrogène. La compaction augmente aussi la conductivité thermique en diminuant les vides à l'intérieur du matériau.

Le GNE est une forme de graphite modifié par traitements chimiques et thermiques. Le GNE est bon conducteur de chaleur et améliore par conséquent la conductivité thermique du matériau composite. Sa présence et sa structure favorisent la cohésion du matériau composite. Il en résulte que le matériau composite présente une très bonne tenue mécanique permettant l'usinage des pastilles, et facilitant leur manipulation pour leur chargement dans le réservoir.

En outre, et de manière surprenante, contrairement à une poudre d'hydrure métallique, le matériau composite n'est pas pyrophorique ce qui rend sa manipulation plus sûre et facilite notamment le chargement des réservoirs.

Avantageusement, la poudre d'hydrure de magnésium utilisée pour le mélange comporte moins de 10% en poids, de préférence moins de 5% en poids, de magnésium non hydruré. En effet, la poudre sera d'autant plus stable vis-à-vis de l'air que l'hydrure de magnésium sera parfaitement hydruré.

De préférence, avant l'étape de mélange, la poudre d'hydrure de magnésium est activée, afin de présenter des cinétiques d'absorption et de désorption d'hydrogène plus favorables. Cette étape d'activation est réalisée par exemple par co-broyage de l'hydrure de magnésium avec un métal de transition ou un alliage de métaux de transition, ou encore un oxyde de métal de transition, introduit dans des proportions comprises entre 1 et 10% atomique par rapport au mélange.

Le terme « métal de transition » tel qu'utilisé ici vise les éléments chimiques possédant à l'état atomique une sous-couche d partiellement remplie et qui forment au moins un ion avec une sous-couche d et partiellement remplie. Particulièrement visés sont les métaux de transition V, Nb, Ti, Cr et Mn.

Dans un mode de réalisation particulièrement préféré, la poudre d'hydrure de magnésium est activée selon l'enseignement de la demande de brevet français déposée sous le numéro FR 06 51478 et publiée sous le numéro FR 2 900 401 ou celui la demande internationale correspondante publiée sous le numéro WO 2007/125253A1, par co-broyage avec un alliage de structure cubique centrée comprenant du titane, du vanadium et soit du chrome soit du manganèse, introduit dans des proportions comprises entre 1 et 10% atomique par rapport au mélange.

Les particules de GNE se présentent avantageusement sous forme de vermicules de forme allongée, possédant un diamètre de l'ordre de 500 µm et une longueur de quelques millimètres.

Sous l'effet d'une compaction uniaxiale, les vermicules s'orientent sensiblement perpendiculairement à l'axe de compression. Ceci confère au matériau composite un comportement thermique fortement anisotrope, et favorise la conduction de la chaleur perpendiculairement à l'axe de compression.

Avantageusement, les pastilles 6 sont obtenues par compaction uniaxiale suivant leur axe. Il en résulte que les vermicules sont orientés perpendiculairement à l'axe de chaque pastille 6, et que la conductivité thermique radiale des pastilles 6 est améliorée.

La conductivité thermique du matériau composite dépend de la proportion de GNE dans le matériau composite.

Des mesures ont été effectuées sur des pastilles préparées avec différentes teneurs en GNE. Les mesures ont été effectuées sur un banc de mesure en régime permanent conventionnel basé sur le principe de la barre divisée, comme illustré sur la figure 4.

Selon ce principe, un échantillon 50 est positionné entre deux pièces étalon 52a, 52b et disposé entre deux couches 53 d'isolant thermique, le tout étant en contact de part et d'autre avec une plaque chaude 54 et une plaque froide 55. Des thermocouples 56 sont insérés dans les étalons et l'échantillon afin de relever la température en différent endroit répartis entre les plaques 54, 55.

Des échantillons ont été découpés dans les pastilles, suivant l'axe de la pastille et perpendiculairement à cet axe, pour mesurer la conductivité thermique axiale et radiale de chaque pastille.

Trois compositions de matériau composite comprenant 0%, 5% et 10% en poids de GNE ont été testées.

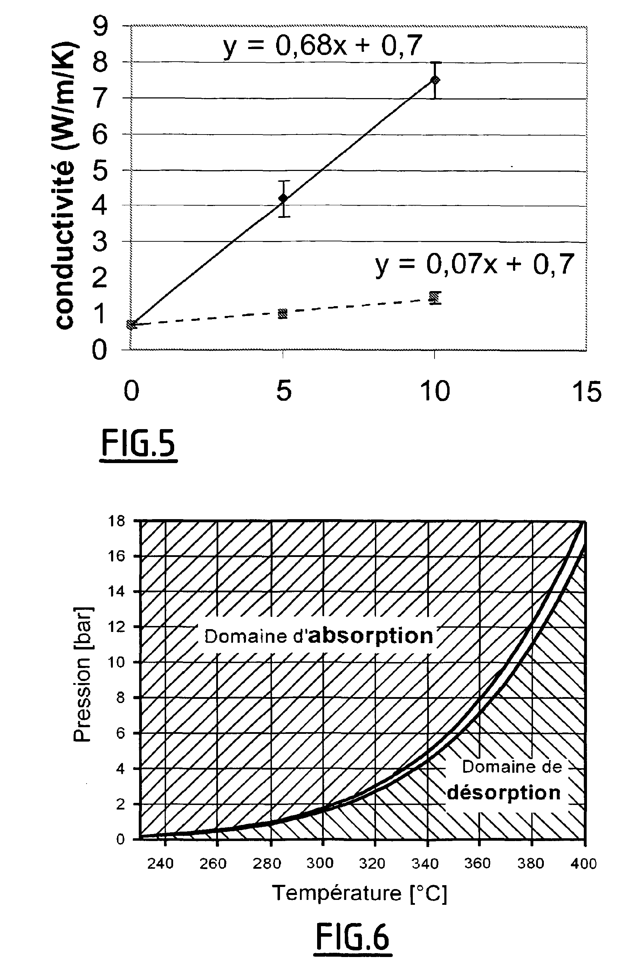

Le graphique de la figure 6 illustre les mesures de conductivité axiale (en pointillés) et radiale (en traits pleins), en fonction de la proportion en poids de GNE. La température moyenne des échantillons lors des mesures était de l'ordre de 30°C.

La conductivité thermique est sensiblement proportionnelle à la proportion de GNE. La conductivité thermique radiale augmente plus rapidement avec la teneur en GNE que la conductivité thermique axiale.

La capacité massique d'absorption d'hydrogène du matériau composite dépend de la proportion de magnésium dans le matériau composite, le GNE n'absorbant a *priori* pas d'hydrogène.

La proportion de GNE n'est pas particulièrement limitée. Elle est choisie en fonction d'un compromis entre la conductivité thermique et la capacité massique d'absorption d'hydrogène.

Une teneur en GNE faible, de l'ordre de 1 à 10% en poids par rapport à la composition finale, permet déjà d'augmenter de manière significative la conductivité thermique. Aussi, le matériau composite comprend de préférence 5 à 10 % en poids de GNE.

Les cinétiques d'absorption et de désorption de l'hydrogène ne sont pas affectées de manière significative par la mise en forme du matériau.

Il est supposé que le matériau ne contient pas ou très peu de composés résultant d'une réaction chimique entre l'hydrure de magnésium activé et le GNE.

Le matériau composite est de fabrication aisée. Il utilise des matières premières disponibles, il est peu coûteux et il ne nécessite pas d'équipement sophistiqué pour sa réalisation et sa mise en forme en pastille.

En fonctionnement, on décharge de l'hydrogène du réservoir 2 par désorption de l'hydrogène du matériau composite dans des conditions de pression et de température adéquates, et on charge de l'hydrogène dans le réservoir 2 par absorption de l'hydrogène par du magnésium du matériau composite dans des conditions de pression et de température adéquates.

La désorption d'hydrogène du matériau composite conduit à la formation de magnésium métallique, disponible pour une absorption ultérieure d'hydrogène.

Le graphique de la figure 6 illustre la courbe d'équilibre entre magnésium (Mg) et hydrure de magnésium (MgH2) en fonction de la température et de la pression.

La désorption de l'hydrogène par l'hydrure de magnésium est endothermique, et s'interrompt spontanément en l'absence d'apport de chaleur. L'absorption d'hydrogène par du magnésium est exothermique, et il convient d'évacuer la chaleur pour charger l'hydrogène dans un délai raisonnable en évitant que la réaction ne s'interrompe spontanément.

Pour charger le réservoir 2 en hydrogène ou en extraire de l'hydrogène, on maintient la pression d'hydrogène à l'intérieur du conteneur 4 et la température des pastilles 6 dans les plages appropriées.

La température des pastilles 6 est ajustée à l'aide des éléments chauffants 44 et de l'échangeur de chaleur 24. Les éléments chauffants 44 sont utilisés principalement pour apporter de la chaleur aux pastilles. L'échangeur de chaleur 24 est utilisé principalement pour évacuer de la chaleur, en faisant circuler à l'intérieur de l'échangeur de chaleur 24 un fluide à faible température. L'échangeur de chaleur 24 peut également être utilisé pour apporter de la chaleur en faisant circuler à l'intérieur de l'échangeur de chaleur 24 un fluide à température élevée.

Pendant le chargement et le déchargement, l'hydrogène sort ou pénètre dans les pastilles 6 par les porosités du matériau composite.

La surface d'échange entre l'hydrogène et les pastilles 6 est importante du fait qu'elle se situe à la périphérie de grand diamètre des pastilles 6. Dans une variante, pour augmenter cette surface d'échange, il existe un jeu axial entre chaque pastille 6 et chaque plaque 40, de sorte que les échanges gazeux s'effectuent également par les surfaces opposées des pastilles 6.

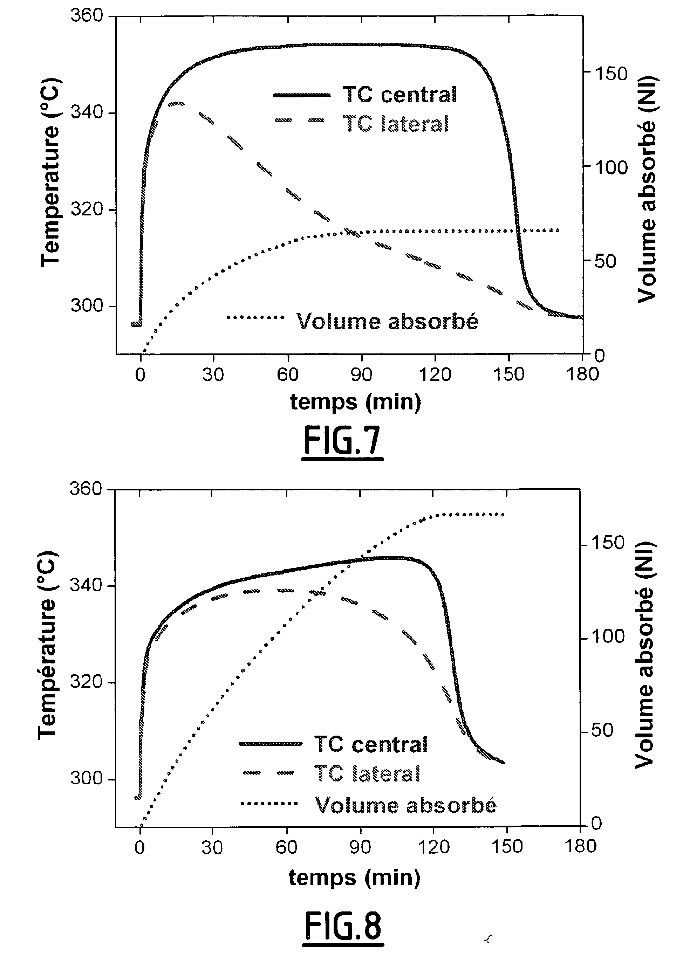

Des essais comparatifs dont les résultats sont représentés sur les figures 7 à 10, ont été effectués pour illustrer l'amélioration des performances obtenue avec un réservoir conforme à l'invention.

Un premier essai de chargement en hydrogène a été effectué sur un réservoir tel que celui des figures 1 et 2, comprenant un conteneur de 270 cm³, mais dépourvu d'échangeur thermique et d'éléments chauffant, rempli de 110 g de poudre d'hydrure de magnésium. Le réservoir a été équipé d'un débitmètre et de sondes de températures.

Un deuxième essai a été effectué avec le même réservoir, rempli cette fois de pastilles de 7 cm de diamètre extérieur, chaque pastille comprenant 5% en masse de GNE, et 95% de poudres d'hydrure de magnésium, l'ensemble des pastilles représentant une masse totale de 250 g et toujours dépourvu d'échangeur thermique et d'éléments chauffants internes.

Les deux essais ont été effectués après déshydruration complète de l'hydrure de magnésium contenu dans le réservoir, en disposant le réservoir dans un four pour chauffer le réservoir à une température initiale de 300°C, puis en mettant le réservoir sous pression de 0.8 MPa d'hydrogène.

Les graphiques des figures 7 et 8 illustrent le volume d'hydrogène chargé, la température au centre et la température à la périphérie du réservoir pour le premier essai (figure 7) et le deuxième essai (figure 8).

Le volume d'hydrogène absorbé par les pastilles est supérieur à celui absorbé par la poudre : 170 NL contre 65 NL (Normo Litres).

Ceci est du au fait que la compaction des pastilles augmente la densité volumique en hydrure métallique, et donc la capacité volumique de stockage d'hydrogène.

La vitesse de chargement d'hydrogène est supérieure avec les pastilles, et ce alors que la masse de magnésium et donc la quantité de chaleur à évacuer est multipliée par un facteur supérieur à 2.

La comparaison des températures relevées au centre et à la périphérie du conteneur montre que la température est plus homogène dans les pastilles que dans la poudre.

Ces résultats montrent que le matériau composite compacté permet d'améliorer la conductivité thermique et la capacité volumique de stockage d'hydrogène.

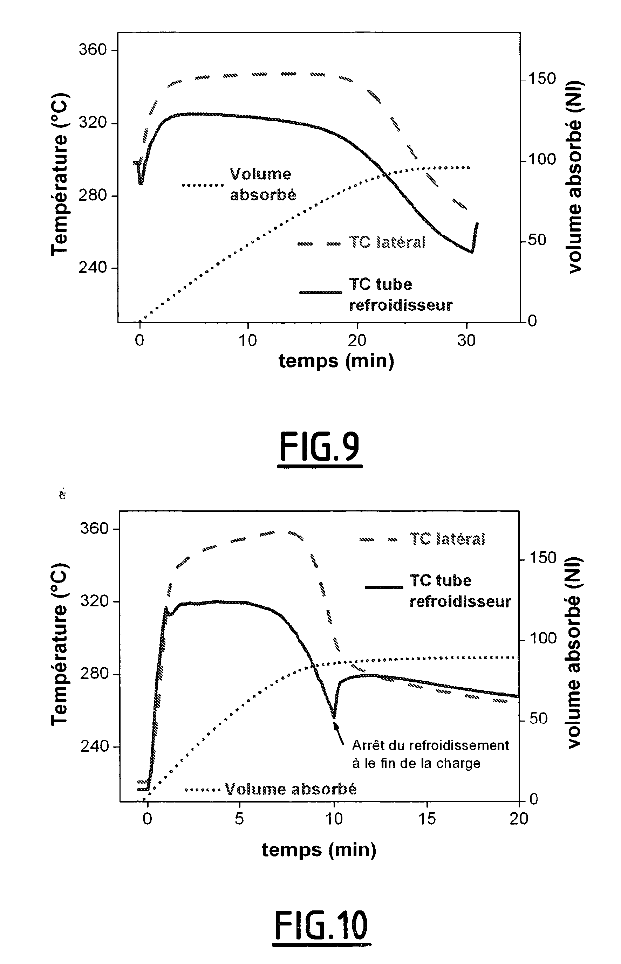

Les figures 9 et 10 illustrent les troisième et quatrième essais effectués à l'aide du même réservoir, équipé cette fois de l'échangeur thermique et des éléments chauffants. Le réservoir est ainsi conforme à celui des figures 1 et 2.

Les troisième et quatrième essais ont été effectués à partir de conditions différentes. Les conditions initiales du troisième essai (figure 9) sont : température 300°C, et pression 1 MPa. Les conditions initiales du quatrième essai (figure 10) sont température 220 °C, et pression 1.6 MPa.

Le chargement est plus rapide à partir de 220°C.

En comparant au deuxième essai, on note en outre que le chargement est beaucoup plus rapide avec l'échangeur de chaleur. Ceci tient au fait que la réaction d'hydruration du magnésium est très exothermique, et qu'en l'absence d'une évacuation efficace de la chaleur, les conditions d'équilibre sont très rapidement atteintes. La cinétique de réaction devient très lente et conduit à un délai de chargement très long. La réaction peut même s'interrompre spontanément dans les parties du réservoir les moins bien refroidies.

La comparaison du premier essai avec les troisième et quatrième essais montre un volume d'absorption plus important dans le deuxième essai. Ceci tient uniquement au fait que la quantité d'hydrure de magnésium était plus importante dans le deuxième essai du fait de l'absence d'échangeur de chaleur qui occupe une partie du volume du réservoir.

La conductivité thermique améliorée des pastilles 6 facilite l'ajustement de la température des pastilles 6, ce qui permet de maintenir les pastilles dans des conditions de température favorables à des chargements et des déchargements en hydrogène rapides.

En outre, la présence de l'échangeur de chaleur facilite le maintient des pastilles dans des conditions plus favorables pour le chargement du réservoir en hydrogène.

Par ailleurs, la disposition des pastilles 6 dans le réservoir 2 permet un arrosage efficace. L'espace annulaire 22 entre les pastilles 6 permet une bonne circulation et une bonne répartition de l'hydrogène, avec une surface de contact importante avec les pastilles 6. Le jeu annulaire qui en résulte entre les pastilles 6 et la surface intérieure latérale du conteneur 4 autorise une dilatation des pastilles lors des chargements et déchargements successifs du réservoir.

La bonne tenue mécanique des pastilles 6 n'est pas altérée par la répétition de cycles de chargement et de déchargement du réservoir 2.

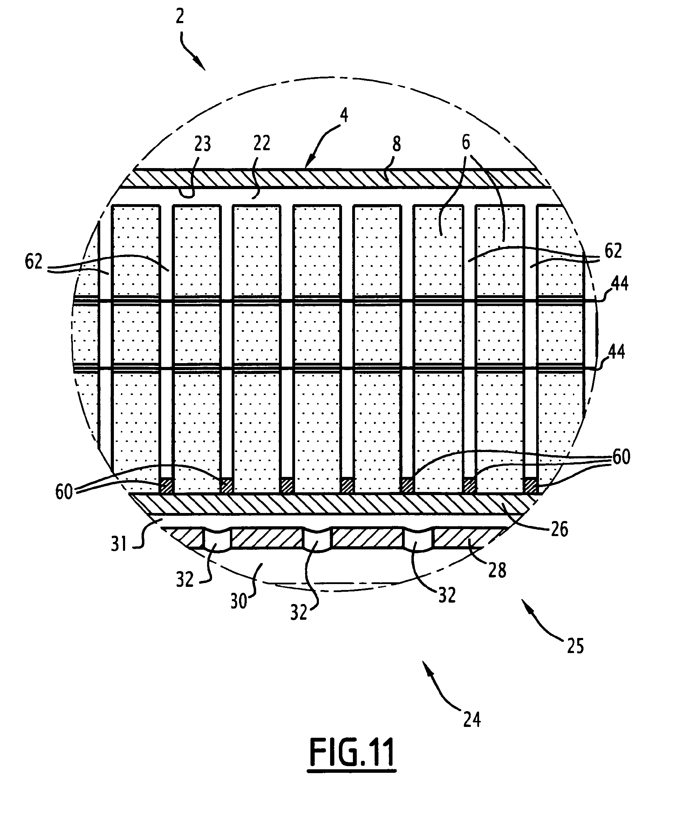

La figure 11 est une vue analogue à celle de la figure 2, illustrant un réservoir selon un autre mode de réalisation. Les références numériques aux éléments semblables à ceux du premier mode de réalisation ont été conservées.

Le réservoir 2 du deuxième mode de réalisation se distingue de celui du premier mode de réalisation par le fait que l'échangeur de chaleur 24 est dépourvu de plaques métalliques intercalées entre les pastilles 6.

Les pastilles 6 sont enfilées directement sur le tube externe 26 de la canalisation 25 de l'échangeur de chaleur 24 en étant maintenues espacées les unes des autres par des entretoises 60 tubulaires intercalées entre les pastilles 6 et permettant de maintenir un espace annulaire 62 libre pour la circulation des gaz entre chaque paire de pastilles 6 adjacentes.

Les pastilles 6 possèdent une teneur en GNE d'environ 20% en poids par rapport à la composition finale.

L'augmentation de la teneur en GNE jusqu'à environ 20% permet d'augmenter la conductivité thermique des pastilles 6, et ainsi de compenser l'absence de plaque métalliques d'échange de chaleur intercalées entre les pastilles 6.

La suppression des plaques métalliques permet de limiter le coût du réservoir et son poids. Cela permet également d'éviter une réaction du métal constituant les plaques avec le magnésium. Le cuivre de plaques en cuivres pourrait réagir à terme avec le magnésium pour former un composé MgCu.

Le réservoir de la figure 11 possède une capacité gravimétrique en hydrogène, i.e. la masse d'hydrogène stockable dans le réservoir comparée au poids des pastilles 6, augmentée par rapport à celle du réservoir de la figure 2, i.e. la masse d'hydrogène stockable dans le réservoir comparée au poids des pastilles 6 ajouté à celui des plaques métalliques.

Des mesures effectuées sur les réservoirs des figures 2 et 11 ont montré une capacité gravimétrique de 2.9% en masse d'hydrogène pour le réservoir de la figure 2, contre une capacité gravimétrique de 4.88% en masse d'hydrogène pour le réservoir de la figure 11.

Le maintien d'un écartement entre les pastilles 6 permet un d'obtenir une surface d'échange importante entre les pastilles 6 et l'hydrogène, ce qui permet d'obtenir des vitesses de chargement/déchargement d'hydrogène satisfaisantes.

Des mesures effectuées de façon analogue à celle du quatrième essai ont montré qu'une configuration de réservoir sans plaques métalliques mais avec une proportion de GNE augmentée à environ 20% en poids dans les pastilles 6 permet d'obtenir des vitesses de chargement/déchargement d'hydrogène et une quantité d'hydrogène stockée du même ordre que pour le réservoir du premier mode de réalisation, avec des plaques métalliques, et avec une proportion de GNE d'environ 5 % en poids dans les pastilles 6.

La proportion de GNE des pastilles 6 est comprise entre 15% et 25%, notamment environ 20%, pour permettre un stockage important d'hydrogène tout en favorisant les échanges thermiques.

Dans une variante, les pastilles 6 ne sont pas espacées, ou sont remplacées par un seul corps solide monobloc.

L'invention s'applique notamment aux réservoirs pour moteur à combustion interne ou pour pile à combustible, en particulier sur les véhicules automobiles, et plus généralement pour toute application stationnaire ou mobile.

## Revendications

1. Réservoir de stockage d'hydrogène sous forme d'hydrure métallique, du type comprenant un conteneur (4) pour contenir de l'hydrogène, et de l'hydrure métallique disposé à l'intérieur du conteneur,
**caractérisé en ce qu'**il comprend au moins un corps solide (6) formé d'un matériau compacté comprenant de l'hydrure métallique et une matrice.

2. Réservoir selon la revendication 1, dans lequel la matrice est formée de graphite expansé, de préférence de graphite naturel expansé.

3. Réservoir selon la revendication 1 ou 2, dans lequel l'hydrure métallique est un hydrure de magnésium ou d'alliage de magnésium.

4. Réservoir selon l'une quelconque des revendications précédentes, comprenant une pluralité de corps solides (6) empilés à l'intérieur du conteneur (4) suivant une direction d'empilement (L).

5. Réservoir selon l'une quelconque des revendications précédentes, dans lequel le ou chaque corps solide (6) présente la forme d'une pastille.

6. Réservoir selon l'une quelconque des revendications précédentes, dans lequel le ou chaque corps solide (6) est maintenu à l'intérieur du conteneur (4) de façon à ménager un espace annulaire (22) entre surface intérieure latérale (23) du conteneur (4) et le ou chaque corps solide (6).

7. Réservoir selon l'une quelconque des revendications précédentes, comprenant un échangeur de chaleur (24) comprenant au moins une canalisation (25) pour un fluide caloporteur, s'étendant à l'intérieur du conteneur (4)

8. Réservoir selon la revendication 7, dans lequel la canalisation (25) s'étend au travers de corps solides (6).

9. Réservoir selon la revendication 8, comprenant des plaques (40) métalliques enfilées sur la canalisation (25) en alternance avec les corps solides (6).

10. Réservoir selon la revendication 9, comprenant des entretoises annulaires (42) enfilées sur la canalisation (25) en alternance avec les plaques métalliques (40), le ou chaque corps solide (6) étant enfilé sur une entretoise (42).

11. Réservoir selon l'une quelconque des revendications 7 à 10, dans lequel la canalisation (25) comprend un conduit d'alimentation (30) et un conduit d'évacuation (31) d'un fluide caloporteur sensiblement coaxiaux.

12. Réservoir selon la revendication 11, dans lequel la canalisation (25) comprend un tube externe (26) et un tube interne (28) s'étendant à l'intérieur du tube externe, le tube interne (28) définissant l'un du conduit d'alimentation et du conduit d'évacuation du fluide caloporteur, et le tube externe (26) définissant avec le tube interne l'autre parmi le conduit d'alimentation et le conduit d'évacuation.

13. Réservoir selon la revendication 12, dans lequel le conduit d'alimentation communique avec le conduit d'évacuation par l'intermédiaire d'orifices (32) répartis le long du tube interne (28).

14. Réservoir selon la revendication 12 ou 13, dans lequel le conduit d'évacuation (31) est annulaire et entoure le conduit d'alimentation (30).

15. Réservoir selon l'une quelconque des revendications précédentes, comprenant des éléments de chauffage (44) des corps solides (6).

16. Réservoir selon la revendication 15, dans lequel chaque élément de chauffage (44) s'étend au travers de plusieurs corps solides (6).

17. Réservoir selon la revendication 15 ou 16, dans lequel les éléments de chauffage (44) sont des résistances électriques.

18. Réservoir selon la revendication 4, dans lequel les corps solides (6) sont maintenus mutuellement espacés le long de l'axe d'empilement, avec des espaces (62) de circulation de gaz entre eux.

19. Réservoir selon les revendications 2 et 18, dans lequel le ou chaque corps solide comprend entre 15% et 25% en masse de graphite expansé, notamment environ 20% en masse de graphite expansé

20. Réservoir selon les revendications 2 et 9 dans lequel le ou chaque corps solide comprend entre 1 et 10% en masse de graphite expansé, notamment entre 5% et 10% en masse de graphite expansé.

## Claims

1. A tank for storing hydrogen in the form of metallic hydride, of the type comprising a container (4) for housing hydrogen, and metallic hydride disposed inside the container,
**characterized in that** it comprises at least one solid body (6) formed of a compacted material comprising metallic hydride and a matrix.

2. A tank according to claim 1, wherein the matrix is formed of expanded graphite, preferably expanded natural graphite.

3. A tank according to claim 1 or 2, wherein the metallic hydride is a hydride of magnesium or of magnesium alley.

4. A tank according to any one of the preceding claims, comprising a plurality of solid bodies (6) stacked inside the container (4) in a stacking direction (L).

5. A tank according to any one of the preceding claims, wherein the or each solid body (6) is in the form of a pellet.

6. A tank according to any one of the preceding claims, wherein the or each solid body (6) is held inside the container (40) in such a way as to create an annular space (22) between the lateral inner surface (23) of the container (4) and the or each solid body (6).

7. A tank according to any one of the preceding claims, comprising a heat exchanger (24) comprising at least one duct (25) for a heat exchange fluid, extending inside the container (4).

8. A tank according to claim 7, wherein the duct (25) extends through solid bodies (6).

9. A tank according to claim 8, comprising metal plates (40) threaded onto the duct (25) alternately with the solid bodies (6).

10. A tank according to claim 9, comprising annular spacers (42) threaded onto the duct (25) alternately with the metal plates (40), the or each solid body (6) being threaded onto a spacer (42).

11. A tank according to any one of claims 7 to 10, wherein the duct (25) comprises a feed pipe (30) and a discharge pipe (31) for a heat exchange fluid which are substantially coaxial.

12. A tank according to claim 11, wherein the duct (25) comprises an outer tube (26) and an inner tube (28) extending inside the outer tube, the inner tube (28) defining one of the feed pipe and the discharge pipe for the heat exchange fluid, and the outer tube (26) defining with the inner tube the other of the feed pipe and the discharge pipe.

13. A tank according to claim 12, wherein the feed pipe communicates with the discharge pipe via openings (32) distributed along the inner tube (28).

14. A tank according to claim 12 or 13, wherein the discharge pipe (31) is annular and surrounds the feed pipe (30).

15. A tank according to any one of the preceding claims, comprising heating elements (44) for the Solid bodies (6).

16. A tank according to claim 15, wherein each healing element (44) extends through several solid bodies (6).

17. A tank according to claim 15 or 16, wherein the heating elements (44) are electrical resistances.

18. A tank according to claim 4, wherein the solid bodies (6) are held spaced apart from one another along the stacking taxis, with spaces (62) for gas circulation between them.

19. A tank according to claims 2 and 18, wherein the or each solid body comprises between 15% and 25% by mass of expanded graphite, in particular about 20% by mass of expanded graphite.

20. A tank according to claims 2 and 9 wherein the or each solid body comprises between 1 and 10% % by mass of expanded graphite, in particular between 5% and 10% by mass of expanded graphite.

## Patentansprüche

1. Sammelbehälter zum Speichern von Wasserstoff in Form von Metallhydrid, des Typs, der einen Behälter (4) zum Aufnehmen von Wasserstoff und ein Metallhydrid aufweist, das im Inneren des Behälters aufgenommen ist,
**dadurch gekenntzeichnet, dass** er mindestens einen aus einem verdichteten Material gebildeten Festkörper (6) aufweist, der Metallhydrid und eine Matrix aufweist.

2. Sammelbehälter gemäß Anspruch 1, wobei die Matrix aus expandiertem Graphit, vorzugsweise aus expandiertem Naturgraphit gebildet ist.

3. Sammelbehälter gemäß Anspruch 1 oder 2, wobei das Metallhydrid ein Magnesium- oder Magnesiumlegierungs-Hydrid ist.

4. Sammelbehälter gemäß irgendeinem der vorhergehenden Ansprüche, aufweisend eine Mehrzahl von Festkörpern (6), die entlang einer Stapelrichtung (L) im Inneren des Behälters (4) gestapelt sind.

5. Sammelbehälter gemäß irgendeinem der vorhergehenden Ansprüche, wobei der oder jeder Festkörper (6) pelletförmig ist.

6. Sammelbehälter gemäß irgendeinem der vorhergehenden Ansprüche, wobei der oder jeder Festkörper (6) derart: im Inneren des Behälters (4) gehalten ist, dass ein ringförmiger Raum (22) zwischen der seitlichen Innenfläche (23) des Behälters (4) und dem oder jedem Festkörper (6) bereitgestellt wird.

7. Sammelbehälter gemäß irgendeinem der vorhergehenden Ansprüche, aufweisend einen wärmetauscher (24), der mindestens eine Rohrleitung (25) für eine Kühlflüssigkeit aufweist, die sich im Inneren des Behälters (4) erstreckt.

8. Sammelbehälter gemäß Anspruch 7, wobei sich die Rohrleitung (25) durch Festkörper (6) hindurcherstreckt.

9. Sammelbehälter gemäß Anspruch 8, aufweisend Metallplatten, die abwechselnd mit den Festkörpern (6) an der Rohrleitung (25) aneinandergereiht sind.

10. Sammelbehälter gemäß Anspruch 9, aufweisend ringförmige Abstandsstücke (42), die abwechselnd mit den Metallplatten (40) an der Rohrleitung (25) aneinandergereiht sind, wobei der oder jeder Festkörper (6) an ein Abstandsstück (42) gereiht ist.

11. Sammelbehälter gemäß irgendeinem der Ansprüche 7 bis 10, wobei die Rohrleitung (25) eine Versorgungsleitung (30) und eine Abflussleitung (31) für eine Kühlflüssigkeit aufweist, die im Wesentlichen koaxial sind.

12. Sammelbehälter gemäß Anspruch 11, wobei die Rohrleitung (25) ein äußeres Rohr (26) und ein inneres Rohr (28) aufweist, das sich im Inneren des äußeren Rohres erstreckt, wobei das innere Rohr (28) die eine von der Versorgungsleitung und der Abflussleitung für die Kühlflüssigkeit definiert und das äußere Rohr (26) mit dem inneren Rohr die andere von der Versorgungsleitung und der Abflussleitung definiert.

13. Sammelbehälter gemäß Anspruch 12, wobei die Versorgungsleitung über Öffnungen (32), die entlang dem inneren Rohr (28) verteilt sind, mit der Abflussleitung kommuniziert.

14. Sammelbehälter gemäß Anspruch 12 oder 13, wobei die Abflussleitung (31) ringförmig ist und die Versorgungsleitung (30) umgibt.

15. Sammelbehälter gemäß irgendeinem der vorhergehenden Ansprüche, aufweisend Heizelemente (44) für die Festkörper (6).

16. Sammelbehälter gemäß Anspruch 15, wobei sich jedes Heizelement (44) durch mehrere Festkörper (6) hindurcherstreckt.

17. Sammelbehälter gemäß Anspruch 15 oder 16, wobei die Heizelemente (44) elektrische Widerstände sind.

18. Sammelbehälter gemäß Anspruch 4, wobei die Festkörper (6) entlang der Stapelachse im Abstand voneinander gehalten sind, wobei zwischen ihnen Gaszirkulationsräume (62) vorgesehen sind.

19. Sammelbehälter gemäß den Ansprüchen 2 und 18 , wobei der oder jeder Festkörper zwischen 15 Massen-% und 25 Massen-% expandiertes Graphit, insbesondere ungefähr 20 Massen-% expandiertes Graphit aufweist.

20. Sammelbehälter gemäß den Ansprüchen 2 und 9, wobei der oder jeder Festkörper zwischen 1 Massen-% und 10 Massen-% expandiertes Graphit, insbesondere zwischen 5 Massen-% und 10 Massen-% expandiertes Graphit aufweist.
